# EUROPÄISCHE PATENTSCHRIFT

(11) **EP 3 002 491 B1**
(45) Veröffentlichungstag und Bekanntmachung des Hinweises auf die Patenterteilung: **18.11.2020**
(21) Anmeldenummer: 15002633.4
(22) Anmeldetag: 09.09.2015
(51) Int. Cl.: F16L 11/12, F16L 11/10

(54) **WASSERLEITUNG**
WATER CONDUIT
CONDUITE D'EAU

(30) Priorität: 09.09.2014 CN 201420514231 U; 12.12.2014 DE 202014009860 U
(43) Veröffentlichungstag der Anmeldung: 06.04.2016
(73) Patentinhaber: PEARL. GmbH, 79426 Buggingen (DE); Lü, Zifa, Xishan, Xixi 321300 YongKang Zhejiang (CN); YONGKANG LONGYINGFEI INDUSTRY AND TRADING CO., LTD., XiShang Industrial Zone XiXi Town 321309 YongKang City Zhejiang (CN)
(72) Erfinder: LÜ, Zifa, 321300 Yongkang, Zhejiang Province (CN)
(74) Vertreter: Mertzlufft-Paufler, Cornelius

(56) Entgegenhaltungen:
- DE-U1-202014 004 448
- US-A1- 2013 087 205

## Beschreibung

### Technisches Gebiet:

Diese Erfindung betrifft eine neuartige reibungsfreie ausziehbare Wasserleitung und gehört zum technischen Gebiet von Wasserleitungen zur Bewässerung.

### Stand der Technik:

Im allgemeinen müssen beim Waschen von Fahrzeugen und beim Bewässern von Gartenanlagen Wasserleitungen verwendet werden, dabei wird für die Außenleitung von derzeitigen Wasserleitungen stets relativ viel Gewebe verwendet, das auf eine Innenleitung aufgewickelt wird, durch die Verwendung von Gewebe mit relativ vielen Falten wird ein Ausziehen der Wasserleitung erreicht, der Ausziehbereich einer solchen Ausführung ist jedoch begrenzt, überdies ist die Reibung der Schutzhülle und der Innenleitung relativ stark, die Innenleitung wird daher leicht beschädigt, die Außenleitung reibt auf dem Boden, die Lebensdauer ist kurz, es besteht auch keine Schmutzresistenz.

Die Gebrauchsmusterschrift DE 20 2014 004 448 U1 offenbart einen Wasserschlauch mit einer ersten Röhre, welche angepasst ist, sich längs und quer auszudehnen, wenn unter Druck stehendes Wasser eingefüllt wird. Der Wasserschlauch hat weiter eine: zweite Röhre, wobei die erste Röhre innerhalb der zweiten Röhre angeordnet und wobei die erste Röhre und die zweite Röhre an ihren entfernten Enden aneinander befestigt sind. Hierbei ist die zweite Röhre angepasst, sich längs und/oder quer auszudehnen, wenn sich die erste Röhre innerhalb der zweiten Röhre ausdehnt.

Die Offenbarungsschrift US 2013/008 7205 A1 offenbart einen Gartenschlauch mit einer inneren und einer äußeren Röhre. Die innere Röhre ist an der äußeren Röhre nur bei einem Einlass und einem Auslass befestigt. Der Auslass ist dabei derart mit einem Flussbegrenzer verbunden, dass die innere Röhre zu einem Druckausgleich mit unter Druck gesetztem Wasser in der Lage ist. Wenn Wasser unter Druck gesetzt wird, dehnt sich die innere Röhre in Längsrichtung und in Querrichtung aus. Sie zieht sich zusammen, wenn der Wasserdruck nachlässt.

### Gegenstand der Erfindung:

Hinsichtlich der genannten Probleme besteht das von dieser Erfindung zu lösende Problem darin, eine neuartige reibungsfreie ausziehbare Wasserleitung bereitzustellen.

Die neuartige, reibungsfrei ausziehbare Wasserleitung dieser Erfindung enthält eine Wasserleitung, ein Wasserablaufanschlussstück und ein Wasserzufuhranschlussstück, die beiden Enden der Wasserleitung sind jeweils mit dem Wasserablaufanschlussstück und dem Wasserzufuhranschlussstück verbunden, die Ausführung des Wasserablaufanschlussstücks und des Wasserzufuhranschlussstücks sind identisch, die besagte Wasserleitung enthält eine ausziehbare Innenleitung und eine ausziehbare Schutzhülle, die ausziehbare Schutzhülle ist auf der Außenseite der ausziehbaren Innenleitung aufgesetzt und verbunden. Der Begriff "reibungsfrei" darf hierbei nicht im Wortsinne verstanden werden, sondern wird verkürzend verwendet. Gemeint ist dabei vielmehr, dass die Bewegung von Schutzhülle und Innenleitung gegeneinander beim Aus- und wieder Zusammenziehen weitgehend oder im Wesentlichen reibungsfrei, jedenfalls aber extrem reibungsarm stattfindet.

Erfindungsgemäß enthält das besagte Wasserablaufanschlussstück einen ersten Anschlusskopf und einen zweiten Anschlusskopf, das obere Ende des ersten Anschlusskopfes ist mit einem ersten Gewindeanschlusskopf versehen, sein unteres Ende ist mit einem zweiten Gewindeanschlusskopf versehen. Die Innenseite des zweiten Anschlusskopfes ist mit einem Durchgangsloch versehen, der Oberteil des Durchgangslochs ist mit einem Innengewindeloch versehen, das Innengewindeloch entspricht dem zweiten Gewindeanschlusskopf. Die beiden Enden der ausziehbaren Innenleitung und der ausziehbaren Schutzhülle sind durch den ersten Anschlusskopf verbunden und befestigt, an den Verbindungsstellen des ersten Anschlusskopfes sind Klemmelemente mit den beiden Enden der Wasserleitung klemmend verbunden. Auf dem zweiten Gewindeanschlusskopf eines Endes des ersten Anschlusskopfes ist ein zweiter Anschlusskopf eingedreht, der zweite Anschlusskopf ist auf der Wasserleitung aufgesetzt und verbunden. Die Klemmelemente sind an der Innenseite des zweiten Anschlusskopfes angeordnet.

Bevorzugt ist das Unterteil der Außenseite des ersten Gewindeanschlusskopfes im besagten Wasserzufuhranschlussstück mit einem Dichtungsring versehen. Bei der Verbindung mit einem Wasserhahn oder einem dergleichen Flüssigkeit zuführenden Anschluss wird das Lecken von Wasser vermieden.

Erfindungsgemäß handelt es sich bei der besagten ausziehbaren Schutzhülle um eine Schutzschicht-Außenleitung, die aus ausziehbarem Material gewebt ist.

Erfindungsgemäß vollzieht dieses ausziehbare Material der Schutzhülle das größer und kleiner werden beim Auseinanderziehen und Schrumpfen der erfindungsgemäßen Wasserleitung mit, ist also in gewissen Grenzen elastisch, was bedeutet, dass die Beaufschlagung der Innenleitung mit einer Flüssigkeit mit einer reversiblen Längenänderung der Schutzhülle einhergeht. Aufgrund der Elastizität der Schutzhülle nimmt diese ihre ursprüngliche Form bei Abwesenheit der Beaufschlagung wieder ein.

Erdindungsgemäß ist die Struktur der bevorzugt elastischen Schutzhülle dabei wenigstens teilweise aus einem elastischen Material gewebt.

Bevorzugt handelt es sich bei der besagten ausziehbaren Innenleitung um eine Innenleitung, die aus Latex und einem synthetischen Harz hergestellt ist.

Der Nutzeffekt dieser Erfindung besteht in folgendem: Seine Ausführung ist eine Neuheit, der Ausziehbereich ist groß, im allgemeinen ist ein Ausziehen um das 1,5-fache bis 3,5-fache möglich, die Lebensdauer der Außenleitung ist lang, die Außenleitung reibt nicht an der Innenleitung, die nicht ohne weiteres beschädigt wird, die Anwendbarkeit ist hoch.

### Beschreibung der Zeichnungen:

Um die Beschreibung zu vereinfachen, wird diese Erfindung durch die folgenden konkreten Ausführungen und die Zeichnungsfiguren detailliert beschrieben.

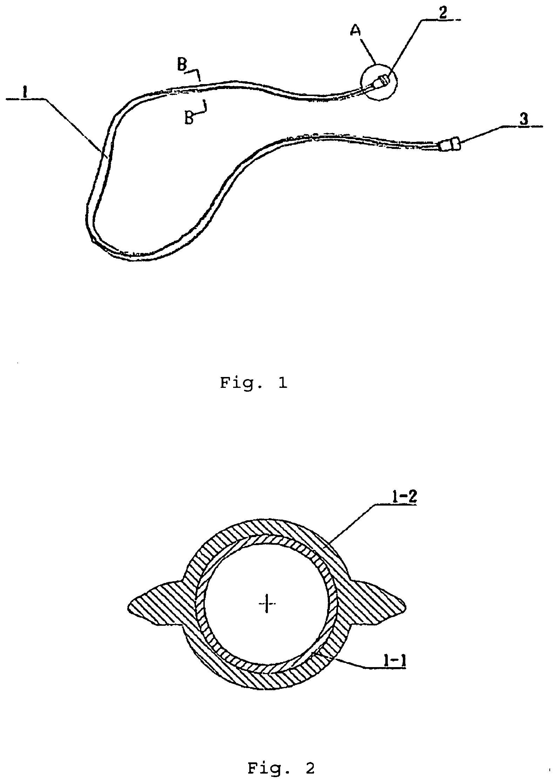

- Fig. 1:: Sie zeigt die schematische Darstellung des Aufbaus dieser Erfindung.
- Fig. 2:: Sie zeigt das Schnittbild B-B von Zeichnung 1.

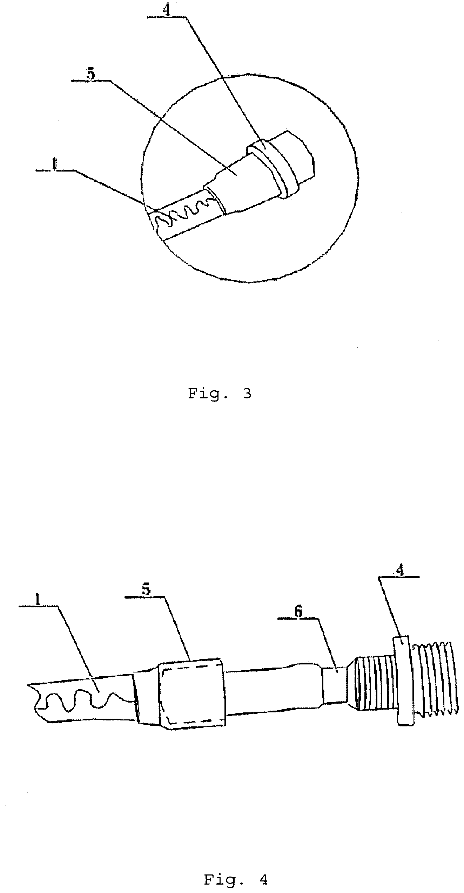

- Fig. 3:: Sie zeigt eine vergrößerte Darstellung des Teils A von Zeichnung 1.
- Fig. 4:: Sie zeigt eine Explosionsdarstellung der Verbindung der Wasserleitung 1 mit dem Wasserablaufanschlussstück 2.

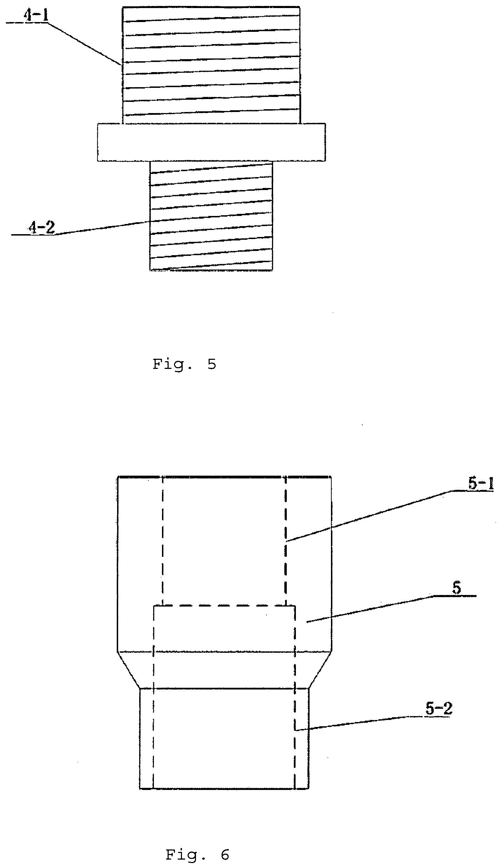

- Fig. 5:: Sie zeigt die schematische Darstellung des Aufbaus des ersten Anschlusskopfes 4 in dieser Erfindung.
- Fig. 6:: Sie zeigt die schematische Darstellung des Aufbaus des zweiten Anschlusskopfes 5 in dieser Erfindung.

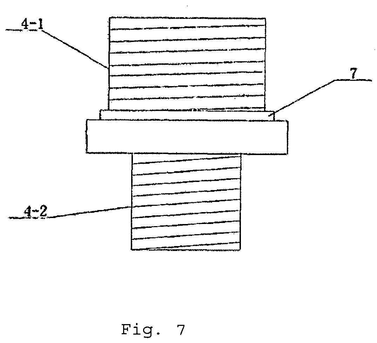

- Fig. 7:: Sie zeigt die schematische Darstellung des Aufbaus des auf den ersten Anschlusskopf 4 aufgesetzten und verbundenen Dichtungsrings 7 im Wasserzufuhranschlussstück 3 in dieser Erfindung.

In den Zeichnungen bedeuten die Bezugszeichen:
- 1 -: Wasserleitung,
- 2 -: Wasserablaufanschlussstück,
- 3 -: Wasserzufuhranschlussstück,
- 4 -: erster Anschlusskopf,
- 5 -: zweiter Anschlusskopf,
- 6 -: Klemmelement,
- 7 -: Dichtungsring,
- 1-1 -: ausziehbares Innenrohr,
- 1-2 -: ausziehbare Schutzhülle,
- 4-1 -: erster Gewindeanschlusskopf,
- 4-2 -: zweiter Gewindeanschlusskopf,
- 5-1 -: Innengewindeloch,
- 5-2 -: Durchgangsloch.

### Konkrete Ausführungsformen:

Für ein klareres Verständnis der Ziele, des technischen Konzepts und der Vorzüge dieser Erfindung wird nachfolgend durch die in den Zeichnungen dargestellten konkreten Ausführungsbeispiele dieser Erfindung beschrieben. Es versteht sich jedoch, dass diese Beschreibungen lediglich repräsentativ sind und nicht den Umfang dieser Erfindung einschränken sollen. Außerdem werden in der nachfolgenden Beschreibung die Darstellungen allgemein bekannter Konstruktionen und Techniken weggelassen, um eine unnötige Unübersichtlichkeit bei den Begriffen dieser Erfindung zu vermeiden.

Wie in den Zeichnungen 1 und 2 dargestellt, verwendet diese konkrete Ausführungsform das folgende technische Konzept: Sie enthält die Wasserleitung 1, das Wasserablaufanschlussstück 2 und das Wasserzufuhranschlussstück 3, die beiden Enden der Wasserleitung 1 sind jeweils mit dem Wasserablaufanschlussstück 2 und dem Wasserzufuhranschlussstück 3 verbunden, die Ausführung des Wasserablaufanschlussstücks 2 und des Wasserzufuhranschlussstücks 3 ist identisch, die besagte Wasserleitung 1 enthält die ausziehbare Innenleitung 1-1 und die ausziehbare Schutzhülle 1-2, die ausziehbare Schutzhülle 1-2 ist auf der Außenseite der ausziehbaren Innenleitung 1-1 aufgesetzt und verbunden.

Weiterhin, wie in den Zeichnungen 3 bis 6 dargestellt, enthält das besagte Wasserablaufanschlussstück 2 den ersten Anschlusskopf 4 und den zweiten Anschlusskopf 5, das obere Ende des ersten Anschlusskopfes 4 ist mit dem ersten Gewindeanschlusskopf 4-1 versehen, sein unteres Ende ist mit dem zweiten Gewindeanschlusskopf 4-2 versehen.

Die Innenseite des zweiten Anschlusskopfes 5 ist mit dem Durchgangsloch 5-2 versehen, der Oberteil des Durchgangslochs 5-2 ist mit einem Innengewindeloch 5-1 versehen, das Innengewindeloch 5-1 entspricht dem zweiten Gewindeanschlusskopf 4-2.

Die beiden Enden der ausziehbaren Innenleitung 1-1 und der ausziehbaren Schutzhülle 1-2 sind durch den ersten Anschlusskopf 4 verbunden und befestigt, an den Verbindungsstellen des ersten Anschlusskopfes 4 mit den beiden Enden der Wasserleitung 1 sind Klemmelemente 6 klemmend verbunden.

Auf dem zweiten Gewindeanschlusskopf 4-2 eines Endes des ersten Anschlusskopfes 4 ist der zweite Anschlusskopf 5 eingedreht, der zweite Anschlusskopf 5 ist auf der Wasserleitung 1 aufgesetzt und verbunden, die Klemmelemente 6 sind an der Innenseite des zweiten Anschlusskopfes 5 angeordnet.

Überdies ist, wie in Zeichnung 7 dargestellt, der Unterteil der Außenseite des ersten Gewindeanschlusskopfes 4-1 im besagten Wasserzufuhranschlussstück 3 mit dem Dichtungsring 7 versehen. Bei der Verbindung mit einem Wasserhahn usw. wird das Lecken von Wasser vermieden.

Weiterhin handelt es sich bei der besagten ausziehbaren Schutzhülle 1-2 um eine Schutzschicht-Außenleitung, die aus ausziehbarem Material gewebt ist.

Weitergehend handelt es sich bei der besagten ausziehbaren Innenleitung 1-1 um eine Innenleitung, die aus Latex und einem synthetischen Harz hergestellt ist.

Bei der Ober- und Unterseite der ausziehbaren Schutzhülle 1-2 handelt es sich in dieser konkreten Ausführungsform um eine ebene Fläche, bei ihrer linken und rechten Seite handelt es sich um eine faltige Fläche.

Bei dem Wasserablaufanschlussstück 2 und dem Wasserzufuhranschlussstück 3 handelt es sich in dieser konkreten Ausführungsform um einen Kunststoffanschlusskopf, es kann sich bei ihnen außerdem um einen Edelstahlanschlusskopf oder einen kupfernen Anschlusskopf handeln.

Vorstehend werden die Grundprinzipien und hauptsächlichen Merkmale dieser Erfindung und die Vorzüge dieser Erfindung gezeigt und beschrieben. Dem auf diesem Gebiet tätigen Fachmann ist es geläufig, dass diese Erfindung nicht durch die vorstehenden Ausführungsbeispiele eingeschränkt wird. Was in den vorstehenden Ausführungsbeispielen und in der Beschreibung beschrieben wird, ist lediglich die Beschreibung der Prinzipien dieser Erfindung, unter der Voraussetzung, dass der Geist und der Umfang dieser Erfindung nicht verlassen werden, kann diese Erfindung außerdem jede Art von Veränderungen und Verbesserungen aufweisen, wobei diese Veränderungen und Verbesserungen alle in den Umfang dieser Erfindung fallen, für den Schutz gefordert wird. Der geforderte Schutzumfang dieser Erfindung wird von den anhängenden Ansprüchen definiert.

## Patentansprüche

1. Neuartige reibungsfrei ausziehbare Wasserleitung, welche eine Wasserleitung (1), ein Wasserablaufanschlussstück (2) und ein Wasserzufuhranschlussstück (3) enthält, wobei die beiden Enden der Wasserleitung (1) jeweils mit dem Wasserablaufanschlussstück (2) und dem Wasserzufuhranschlussstück (3) verbunden sind, wobei die Ausführung des Wasserablaufanschlussstücks (2) und des Wasserzufuhranschlussstücks (3) identisch ist, wobei die besagte Wasserleitung (1) eine ausziehbare Innenleitung (1-1) und eine ausziehbare Schutzhülle (1-2) enthält, und wobei die ausziehbare Schutzhülle (1-2) auf der Außenseite der ausziehbaren Innenleitung (1-1) aufgesetzt und verbunden ist, wobei das besagte Wasserablaufanschlussstück (2) einen ersten Anschlusskopf (4) und einen zweiten Anschlusskopf (5) enthält, wobei das obere Ende des ersten Anschlusskopfes (4) mit einem ersten Gewindeanschlusskopf (4-1) versehen ist und sein unteres Ende mit einem zweiten Gewindeanschlusskopf (4-2) versehen ist, wobei die Innenseite des zweiten Anschlusskopfes (5) mit einem Durchgangsloch (5-2) versehen ist, wobei der Oberteil des Durchgangslochs (5-2) mit einem Innengewindeloch (5-1) versehen ist, wobei das Innengewindeloch (5-1) dem zweiten Gewindeanschlusskopf (4-2) entspricht, wobei die beiden Enden der ausziehbaren Innenleitung (1-1) und der ausziehbaren Schutzhülle (1-2) durch den ersten Anschlusskopf (4) verbunden und befestigt sind, wobei an den Verbindungsstellen des ersten Anschlusskopfes (4) mit den beiden Enden der Wasserleitung (1) Klemmelemente (6) klemmend verbunden sind, wobei auf dem zweiten Gewindeanschlusskopf (4-2) eines Endes des ersten Anschlusskopfes (4) ein zweiter Anschlusskopf (5) eingedreht ist, wobei der zweite Anschlusskopf (5) auf der Wasserleitung (1) aufgesetzt und verbunden ist, wobei die Klemmelemente (6) an der Innenseite des zweiten Anschlusskopfes (5) angeordnet sind, wobei die Schutzhülle (1-2) ausziehbar und elastisch ist und **gekennzeichnet dadurch, dass** die Schutzhülle (1-2) aus einem ausziehbaren und wenigstens teilweise aus einem elastischen Material gewebt ist.

2. Neuartige reibungsfrei ausziehbare Wasserleitung gemäß Anspruch 1, **dadurch gekennzeichnet, dass** der Unterteil der Außenseite des ersten Gewindeanschlusskopfes (4-1) im besagten Wasserzufuhranschlussstück (3) mit einem Dichtungsring (7) versehen ist.

3. Neuartige reibungsfrei ausziehbare Wasserleitung gemäß einem der Ansprüche 1 oder 2, **dadurch gekennzeichnet, dass** es sich bei der besagten ausziehbaren Innenleitung (1-1) um eine Innenleitung handelt, die aus Latex und einem synthetischen Harz hergestellt ist.

## Claims

1. Novel water conduit which can be extended without friction and comprises a water conduit (1), a water discharge connector piece (2) and a water feed connector piece (3), the two ends of the water conduit (1) being connected in each case to the water discharge connector piece (2) and the water feed connector piece (3), the design of the water discharge connector piece (2) and the water feed connector piece (3) being identical, the said water conduit (1) comprising an extendable inner conduit (1-1) and an extendable protective covering (1-2), and the extendable protective covering (1-2) being placed and connected on the outer side of the extendable inner conduit (1-1), the said water discharge connector piece (2) comprising a first connector head (4) and a second connector head (5), the upper end of the first connector head (4) being provided with a first threaded connector head (4-1), and its lower end being provided with a second threaded connector head (4-2), the inner side of the second connector head (5) being provided with a through hole (5-2), the upper part of the through hole (5-2) being provided with an internally threaded hole (5-1), the internally threaded hole (5-1) corresponding to the second threaded connector head (4-2), the two ends of the extendable inner conduit (1-1) and the extendable protective covering (1-2) being connected and fastened by way of the first connector head (4), clamping elements (6) being connected in a clamping manner to the two ends of the water conduit (1) at the connecting points of the first connector head (4), a second connector head (5) being screwed on the second threaded connector head (4-2) of one end of the first connector head (4), the second connector head (5) being placed and connected on the water conduit (1), the clamping elements (6) being arranged on the inner side of the second connector head (5), the protective covering (1-2) being extendable and elastic, and **characterized in that** the protective covering (1-2) is woven from an extendable material and at least partially from an elastic material.

2. Novel water conduit which can be extended without friction according to Claim 1, **characterized in that** the lower part of the outer side of the first threaded connector head (4-1) is provided with a seal ring (7) in the said water feed connector piece (3).

3. Novel water conduit which can be extended without friction according to either of Claims 1 and 2, **characterized in that** the said extendable inner conduit (1-1) is an inner conduit which is produced from latex and a synthetic resin.

## Revendications

1. Nouvelle conduite d'eau télescopique sans frottement qui comprend une conduite d'eau (1), une pièce de raccordement d'évacuation d'eau (2) et une pièce de raccordement d'arrivée d'eau (3), les deux extrémités de la conduite d'eau (1) étant respectivement reliées à la pièce de raccordement d'évacuation d'eau (2) et la pièce de raccordement d'arrivée d'eau (3), la réalisation de la pièce de raccordement d'évacuation d'eau (2) et de la pièce de raccordement d'arrivée d'eau (3) étant identique, ladite conduite d'eau (1) comprenant une conduite intérieure télescopique (1-1) et une gaine de protection télescopique (1-2) et la gaine de protection télescopique (1-2) étant placée sur la face extérieure de la conduite intérieure télescopique (1-1) et reliée à celle-là, ladite pièce de raccordement d'évacuation d'eau (2) comprenant une première tête de raccordement (4) et une seconde tête de raccordement (5), l'extrémité supérieure de la première tête de raccordement (4) étant munie d'une première tête de raccordement filetée (4-1) et son extrémité inférieure étant munie d'une seconde tête de raccordement filetée (4-2), la face intérieure de la seconde tête de raccordement (5) étant munie d'un orifice de passage (5-2), la partie supérieure de l'orifice de passage (5-2) étant munie d'un orifice fileté intérieur (5-1), l'orifice fileté intérieur (5-1) correspondant à la seconde tête de raccordement filetée (4-2), les deux extrémités de la conduite intérieure télescopique (1-1) et de la gaine de protection télescopique (1-2) étant reliées et fixées par le biais de la première tête de raccordement (4), des éléments de serrage (6) étant reliés par serrage au niveau des points de liaison de la première tête de raccordement (4) avec les deux extrémités de la conduite d'eau (1), une seconde tête de raccordement (5) étant vissée sur la seconde tête de raccordement filetée (4-2) d'une extrémité de la première tête de raccordement (4), la seconde tête de raccordement (5) étant placée sur conduite d'eau (1) et reliée à celle-là, les éléments de serrage (6) étant disposés sur la face intérieure de la seconde tête de raccordement (5), la gaine de protection (1-2) étant télescopique et élastique,
**caractérisée en ce que**
la gaine de protection (1-2) est tissée à partir d'un matériau télescopique et au moins partiellement à partir d'un matériau élastique.

2. Nouvelle conduite d'eau télescopique sans frottement selon la revendication 1, **caractérisée en ce que** la partie inférieure de la face extérieure de la première tête de raccordement filetée (4-1) est munie d'une bague d'étanchéité (7) dans ladite pièce de raccordement d'arrivée d'eau (3).

3. Nouvelle conduite d'eau télescopique sans frottement selon l'une des revendications 1 ou 2, **caractérisée en ce que** ladite conduite intérieure télescopique (1-1) est une conduite intérieure qui est fabriquée à partir de latex et d'une résine synthétique.
